# EUROPÄISCHE PATENTSCHRIFT

(11) **EP 0 416 515 B1**
(45) Veröffentlichungstag und Bekanntmachung des Hinweises auf die Patenterteilung: **10.08.1994**
(21) Anmeldenummer: 90116916.9
(22) Anmeldetag: 04.09.1990
(51) Int. Cl.: F16L 59/02

(54) **Verfahren zur Herstellung einer Hochtemperatursuperisolation**
Process for manufacturing a high temperature insulation
Procédé pour la fabrication d'une isolation pour hautes températures

(30) Priorität: 08.09.1989 DE 3929867
(43) Veröffentlichungstag der Anmeldung: 13.03.1991
(73) Patentinhaber: Asea Brown Boveri Aktiengesellschaft, 68309 Mannheim (DE)
(72) Erfinder: Reiss, Harald, Dr., D-6900 Heidelberg (DE)
(74) Vertreter: Rupprecht, Klaus, Dipl.-Ing.

(56) Entgegenhaltungen:
- EP-A- 0 160 232
- DE-C- 3 741 732
- US-A- 3 952 083
- US-A- 4 421 700

## Beschreibung

Die Erfindung bezieht sich auf ein Verfahren zur Herstellung einer Hochtemperatursuperisolation unter Verwendung von Fasern gemäß dem Oberbegriff des Patentanspruches 1.

Solche Hochtemperatursuperisolationen kommen in der Energietechnik oder Raumfahrt zur Anwendung, insbesondere zum Schutz von Einrichtungen, bei denen Wärmeverluste vermieden werden sollen, oder die vor Hitze, etwa beim Wiedereintreten eines Flugkörpers in die Erdatmosphäre, zu schützen sind.

Aus der Informationsschrift "Superisolationen" VDI-Wärmeatlas, 5. Auflage, 1988, Abschnitt Ke, H. Reiss, ist eine thermische Isolierung bekannt, deren Isoliermaterial aus einem nichtmetallischen Werkstoff hergestellt ist. Hierbei werden um die Innenflächen eines doppelwandigen Gehäuses Papiere aus Glasfasern gewickelt, die aus Weichgläsern hergestellt sind. Der Bereich zwischen den beiden Wänden des Gehäuses kann zusätzlich evakuiert sein. Solche Wicklungen aus Glasfaserpapieren können in gewissen Grenzen geringe Druckbelastungen aufnehmen. Einer höheren Druckbelastung können sie nur widerstehen, wenn ihre Dichte hinreichend groß ist. Der Einsatzbereich dieser Isolationen ist nur bis zu einem Bereich von etwa 400°C möglich, da bei höheren Temperaturen durch eine Druckbelastung die Festigkeit der Glasfasern aus Weichglas beeinträchtigt wird.

Aus der US-A-3,952,083 ist ein Verfahren zur Herstellung einer Isolation bekannt, für deren Herstellung Silicafasern verwendet werden. Diese werden mit einem Bindemittel, das kolloidales Silica enthält, Stärke und Wasser vermischt. Anschließend wird ein Formkörper hergestellt. Dieser wird verpreßt und 18 Stunden lang bei 300° getrocknet.

Der Erfindung liegt die Aufgabe zugrunde, ein Verfahren zur Herstellung einer Hochtemperaturisolation zu schaffen, die druckbelastbar ist, eine geringe Dichte aufweist und die zudem bis zu Temperaturen von 900°C und mehr eingesetzt werden kann.

Ein Verfahren zur Herstellung einer solchen Hochtemperatursuperisolation ist Patentanspruch 1 offenbart.

Die mit dem erfindungsgemäßen Verfahren hergestellte Hochtemperatursuperisolation kann bis zu einem Temperaturbereich von 900°C und mehr eingesetzt werden. Sie benötigt, um hinsichtlich der Druckbelastbarkeit voll wirksam zu sein, keine zusätzlichen selbsttragenden Wände eines Gehäuses oder Stützelemente. Sie verfügt zudem über eine geringe Dichte. Diese beträgt höchstens etwa ein Zehntel der Dichte der Werkstoffe, die zur Herstellung der Fasern verwendet werden, die das Isolationsmaterial bilden.

Weitere erfindungswesentliche Merkmale sind in den abhängigen Ansprüchen offenbart.

Die Erfindung wird nachfolgend anhand von schematischen Zeichnungen näher erläutert. Es zeigen:
- Fig. 1: Die Herstellung des Isolations-materials der Hochtemperatursuperisolation,
- Fig. 2: das fertiggestellte Isolationsmaterial der Hochtemperatursuperisolation,
- Fig. 3: die Verwendung der erfindungsgemäßen Hochtemperatursuperisolation.

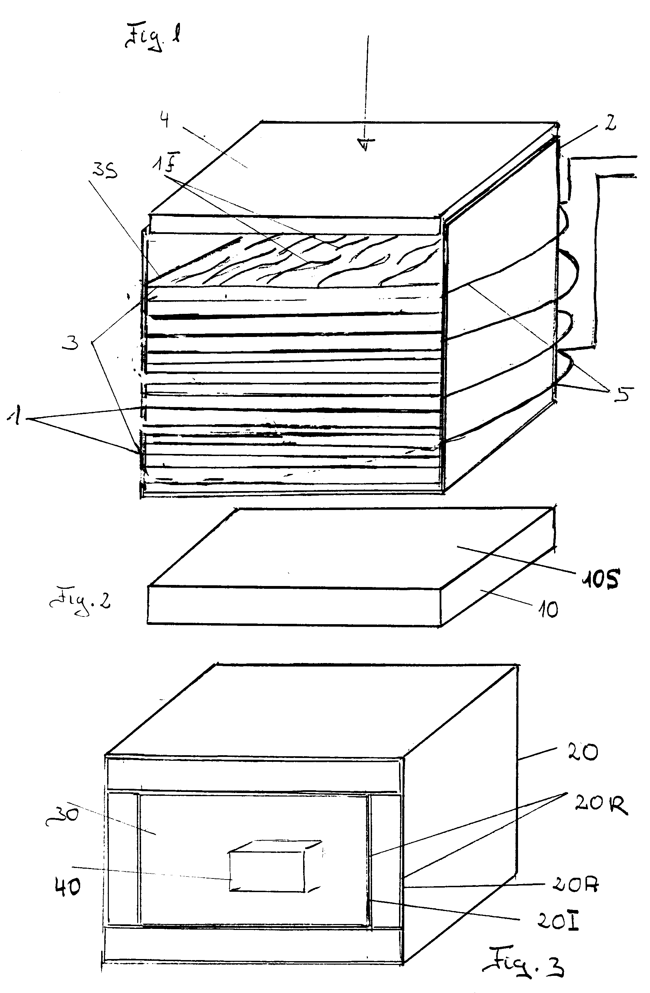

Für die Herstellung der Hochtemperatursuperisolation werden Silicafasern oder andere amorphe Hartglasfasern, so z.B. Fasern aus Quarzglas verwendet. Diese werden zunächst zu Wolle, Papieren, Vliesen oder Filzen verarbeitet. Vorzugsweise werden Fasern mit einer Länge von 50 mm und einem Durchmesser von 0,1 bis 50 µm verwendet. Diese Materialien sind im Handel erhältlich. Die Herstellungsverfahren für diese Werkstoffe gehören bereits seit langem zum Stand der Technik. Sie werden deshalb hier nicht näher erläutert. Erfindungsgemäß besteht die Möglichkeit, die Wolle, Papiere, Vliese oder Filze zusätzlich mit geringen Beimischungen an pulverförmigem oder faserförmigen infrarot optischen Trübungsmitteln zu versehen. Die Herstellung des Isolationsmaterials wird anhand von Fig. 1 erläutert. Sie zeigt einen Behälter 2, in den bei dem hier dargestellten Ausführungsbeispiel Papiere 1 aus amorphen Quarzglasfasern 1F zur Bildung eines Stapels 3 gelegt werden. Diese Fasern 1F werden bereits bei der Herstellung der Papiere 1 so ausgerichtet, daß ihre Längsachsen überwiegend parallel zur Oberfläche der Papiere verlaufen. Bei dem hier dargestellten Ausführungsbeispiel ist der Behälter 2 quaderförmig ausgebildet. Eine Behälter 2 mit einer anderen Geometrie kann auch verwendet werden. Die Papiere 1 sind an den Querschnitt des Behälters 2 angepaßt. Hat der Stapel 3 die Höhe erreicht, die vom Gewicht des zu fertigenden Isolationsmaterials bestimmt wird, so wird eine Deckplatte 4 auf den Stapel 3 aufgelegt. Über eine Preßvorrichtung (hier nicht dargestellt) wird über die Deckplatte 4 ein Fertigungsdruck P_{F} von mindestens 0,025 MPa auf den Stapel 3 ausgeübt. Generell muß der Fertigungsdruck P_{F} annähernd so groß sein, wie der Betriebsdruck P_{S}, welcher später von dem Isolationsmaterial aufzunehmen ist. Mit dem Fertigungsdruck P_{F} wird die spätere Restkompressibilität des Isolationsmaterials eingestellt. Bei niedrigen Werten des Fertigungsdrucks P_{F} etwa dann, wenn der Fertigungsdruck P_{F} einen Wert aufweist, der zwischen einem Viertel und der Hälfte des späteren Betriebsdrucks P_{S} liegt, P_{S}/4 kleiner/gleich P_{F} kleiner/gleich P_{S}/2, beträgt die Restkompressibilität 5% bis 20%. Diese wird mitbestimmt von der Fertigungstemperatur T_{F} der Temperaturbehandlung, die sich an die Druckbehandlung anschließt oder gleichzeitig durchgeführt wird. Mit einem höheren Fertigungsdruck P_{F}, etwa P_{F} größer P_{S}/2, und mit einer hinreichend hohen Fertigungstemperatur T_{F} gelingt es, die Restkompressibilität auf unter 5% zu verringern. Bei einem Fertigungsdruck P_{F} größer/gleich P_{S}/4 stellt sich die Dichte des Isolationsmaterials je nach Fertigungstemperatur T_{F} auf Werte zwischen 150 und 300 kg/m² ein. Dies entspricht höchstens etwa 1/10 der Dichte des Werkstoffs, der für die Faserherstellung verwendet wird. Nach der Druckbehandlung oder während dieser werden die in dem Behälter 2 angeordneten Papiere 1 auf die Fertigungstemperatur T_{F} erhitzt. Der Behälter 2 ist hierfür mit einer Heizung 5 ausgerüstet. Die Fertigungstemperatur T_{F} richtet sich näherungsweise nach der 15-Stunden-Entspannungstemperatur T_{E}, im englischen Strain Point, des Werkstoffs, aus dem die Fasern 1F hergestellt sind. Bei dem hier beschriebenen Beispiel, bei dem Fasern 1F aus Quarzglas für die Herstellung der Papiere 1 verwendet wurden, beträgt die 15-Stunden-Entspannungstemperatur T_{E} etwa 1050°C. Bei dieser temperatur verlieren die Fasern 1F aus Quarzglas nach 15 Stunden ihre mechanischen Spannungen, die durch ihren Herstellungsprozeß bedingt sind. Wird die Fertigungstemperatur T_{F} über T_{E} erhöht, kann die Dauer der temperaturbehandlung auf weniger als 15 Stunden reduziert werden. Wenn die Fasern 1F ihre Eigenspannungen verlieren, weichen sie dem auf ihnen lastenden Fertigungsdruck aus. Sie lassen sich also in eine bestimmte, durch den Druck P_{F} erzwungene und durch die Geometrie des Behälters 2 vorgegebene Form bringen, in der sie nach Abschluß der Druck- und Wärmebehandlung spannungsfrei verbleiben. Durch den ausgeübten Druck P_{F} wird in dem hier beschriebenen Beispiel die Höhe des Stapels 3 verringert, weil die Längsachsen der Fasern 1F in den Papieren 1 senkrecht zur Druckrichtung ausweichen. Die neue Form des Stapels 3 bleibt nach Abschluß der Druck- und Wärmebehandlung dauerhaft stabil, weil sich die Fasern 1F nun in einem spannungsfreien Zustand befinden. Dagegen widersetzen sich die Fasern 1F und der Stapel 3 jeder weiteren Formänderung, beispielsweise bedingt durch eine neuerliche Druckbelastung, z.B. beim Einsatz der Hochtemperatursuperisolation. Dies ist deshalb der Fall, weil eine neuerliche Druckbelastung und damit eine eventuelle Formänderung die Fasern 1F unter erneute mechanische Spannung setzen würde. Die Betriebstemperatur T_{S} des fertiggestellten Isolationsmaterials darf der temperatur T_{E} des Fasermaterials nicht zu nahe kommen. Eine erneute Erwärmung der Fasern 1F auf oder in die Nähe der temperatur T_{E} wäre von Nachteil für das Isolationsmaterial, da die Fasern 1F unter einer gleichzeitigen Druckbelastung erneut erweichen und ihnen dadurch und dem Stapel 3 eine andere, unerwünschte From aufgeprägt werden könnte. Daher ist die Betriebstemperatur T_{S} des fertigen Isolationsmaterials 10 nach oben so zu begrenzen, daß bei T_{S} die Viskosität des Fasermaterials mindestens 2 bis 4 Zehnerpotenzen über der Viskosität des gleichen Materials im Entspannungspunkt liegt. Im Entspannungspunkt beträgt die Viskosität der Glasfasern 10^{14,5} Poise. Die Betriebstemperatur T_{S}, muß so begrenzt werden, daß eine Viskosität von 10^{16,5} Poise nicht unterschritten wird. Die maximale Einsatztemperatur T_{M} hängt also nur von der 15-Stunden-Entspannungstemperatur und dem Sicherheitsabstand hinsichtlich der Viskosität, d.h. nur von den jeweiligen Materialeigenschaften ab. Für hohe Betriebstemperaturen T_{S} müssen dementsprechend amorphe Materialien gewählt werden, deren 15-Stunden-Entspannungstemperatur T_{E} hinreichend groß ist. Bei dem hier dargestellten Ausführungsbeispiel beträgt die temperatur T_{M} 930°C. Bei der Dauer der Druck- und Wärmebehandlung muß zusätzlich darauf geachtet werden, daß es nicht zu einer Kristallisation des Werkstoffs kommt, aus dem die Fasern 1F hergestellt sind.

Nachdem die Druck- und Wärmebehandlung der Papiere 1 abgeschlossen ist, kann dem Behälter 2 das in Fig. 2 dargestellte Isolationsmaterial 10 entnommen werden. Durch die oben beschriebene Druck- und Wärmebehandlung wird bei dem hier dargestellten Ausführungsbeispiel auf Grund der gewählten Form des Behälters 2 aus den einzelnen Papieren 1 ein plattenförmiges Bauteil geformt, da sich die Fasern 1F aus den Randbereichen der aneinandergrenzenden Papiere 1 während ihrer Entspannung neu formieren und sich dabei teilweise miteinander verhaken. Durch die Wahl eines Behälters 2 mit einer anderen Geometrie und einer ebenfalls anders geformten Deckplatte 4, kann dem Isolationmaterial, je nach Wunsch, eine andere Form gegeben werden. Das fertiggestellte Isolationsmaterial 10 kann gleichgültig, welche Geometrie es aufweist, in gewissem Umfang mechanisch weiterverarbeitet werden. Das Zuschneiden und Sägen des Isolationsmaterials 10 ist möglich. Das so fertiggestellte Isolationsmaterial 10 kann nun unmittelbar um eine vor Hitze oder Wärmeverlusten zuschützende Einrichtung (hier nicht dargestellt) angeordnet werden. Um die Wirkung des Isolationsmaterials 10 zu vervollständigen, wird das Isolationsmaterial 10 zwischen den Wänden eines doppelwandigen Gehäuses 20 angeordnet. In Fig. 3 ist ein solches Gehäuses 20 dargestellt. Dieses wird nach außen durch eine Wand 20A und nach innen durch eine Wand 20I begrenzt. Die beiden Wände 20 A und 20I sind in definiertem Abstand voneinander angeordnet, so daß zwischen den beiden Wänden 20A und 20I ein zusammenhängender Raum 20R verbleibt. Dieser kann mit dem Isolationsmaterial 10 vollständig ausgefüllt werden. Nach dem Einfüllen des Materials in den Raum 20R wird dieser, da die Wände 20A und 20I gasdicht ausgebildet sind, evakuiert. Unter einem Vakuum mit einem Restdruck von kleiner/gleich 0,1 Pa hat das Isolationsmaterial 10 auch bei hohen temperaturen und einer zusätzlichen Druckbelastung eine totale Wärmeleitfähigkeit von λ kleiner/gleich 10mW/ (mK). In den Innenraum 30 des Gehäuses 20 kann nun eine Einrichtung 40 angeordnet werden.

## Patentansprüche

1. Verfahren zur Herstellung einer Hochtemperatursuperisolation mit einem Isolationsmaterial (10) aus amorphen Fasern (10), **dadurch gekennzeichnet,** daß Fasern (10) aus Hartglas zu Papieren (1), Wolle, Vliesen und Filzen verarbeitet werden, daß eine definierte Anzahl von Papieren (1), wolle, Vliesen oder Filzen zu einem Stapel (3) vorgegebenen Gewichts aufeinander gehäuft wird, daß der Stapel (3) anschließend senkrecht zur Stapeloberfläche (3S) während einer Dauer von 1 bis 15 Stunden mit einem Fertigungsdruck P_{F} von mindestens 0,025 MPa beaufschlagt wird, und daß eine Temperaturbehandlung bei einer Fertigungstemperatur T_{F}, die bei oder über der 15-Stunden Entspannungstmperatur T_{E} des Fasermaterials liegt, während oder nach der Druckbehandlung durchgeführt wird.

2. Verfahren nach Anspruch 1, dadurch gekennzeichnet, daß zur Bildung des Isolationsmaterials Silicafasern, Fasern aus Quarzglas oder andere Hartglasfasern (1F) zu Papieren (1), Wolle, Vliesen oder Filzen verarbeitet werden.

3. Verfahren nach Anspruch 2, dadurch gekennzeichnet, daß den Papieren (1), der Wolle, den Vliesen oder Filzen ein Zusatz an infrarotoptischen Trübungsmitteln beigemischt wird.

4. Verfahren nach einem der Ansprüche 1 bis 3, dadurch gekennzeichnet, daß die Druck- und Wärmebehandlung, der Fertigungsdruck P_{F}, die Fertigungstemperatur T_{F} und das Gewicht des Stapels (3) so gewählt werden, daß das Isolationsmaterial (10) im Einsatz die geringstmögliche Kompressibilität bei der geringstmöglichen Dichte aufweist.

5. Verfahren nach einem der Ansprüche 1 bis 4, dadurch gekennzeichnet, daß der Stapel (3) einer Fertigungstemperatur T_{F} ausgesetzt wird, die niedriger ist als die Kristallisationstemperatur des Materials, das für die Herstellung der Fasern (1F) verwendet wird.

## Claims

1. Process for the production of a high temperature superinsulation with an insulating material (10) of amorphous fibres (10), characterized in that fibres (10) of hard glass are processed into papers (1), wool, nonwovens and felts, in that a defined number of papers (1), wool, nonwovens or felts is heaped onto one another to form a stack (3) of predetermined weight, in that the stack (3) is subsequently acted upon, perpendicular to the stack surface (3S) during a duration of 1 to 15 hours, by a production pressure P_{F} of at least 0.025 MPa, and in that a temperature treatment is carried out at a production temperature T_{F}, which is at or above the 15 hour relaxation temperature T_{E} of the fibre material, during or after the pressure treatment.

2. Process according to Claim 1, characterized in that to form the insulating material silica fibres, fibres of quartz glass or other hard glass fibres (1F) are processed into papers (1), wool, nonwovens or felts.

3. Process according to Claim 2, characterized in that an additive of infrared-optical opacifiers is admixed with the papers (1), the wool, the nonwovens or felts.

4. Process according to one of Claims 1 to 3, characterized in that the pressure treatment and heat treatment, the production pressure P_{F}, the production temperature T_{F} and the weight of the stack (3) are selected so that the insulating material (10) exhibits, in use, the smallest possible compressibility at the lowest possible density.

5. Process according to one of Claims 1 to 4, characterized in that the stack (3) is exposed to a production temperature T_{F} which is lower than the crystallization temperature of the material which is used for the production of the fibres (1F).

## Revendications

1. Procédé de fabrication d'une superisolation pour températures élevées, comprenant une matière isolante (10) en fibres amorphes (10), caractérisé par le fait que des fibres (10) en verre dur sont transformées en papiers (1), en laine, en non-tissés et en feutres, par le fait qu'un nombre précis de couches de papiers (1), de laine, de non-tissés ou de feutres sont superposées pour former une pile (3) d'un poids prédéterminé, par le fait que la pile (3) est ensuite soumise, perpendiculairement à sa surface (3S), à une pression de fabrication P_{F} d'au moins 0,025 MPa pendant une durée comprise entre 1 et 15 heures, et par le fait que pendant ou après l'application de la pression, on effectue un traitement thermique à une température de fabrication T_{F} qui est égale ou supérieure à la température de relaxation T_{E} pendant 15 heures de la matière fibreuse.

2. Procédé selon la revendication 1, caractérisé par le fait que pour l'obtention de la matière isolante, des fibres de silice, des fibres de verre quartzeux ou d'autres fibres de verre dur (1F) sont transformées en papiers (1), en laine, en non-tissés ou en feutres.

3. Procédé selon la revendication 2, caractérisé par le fait que l'on mélange aux papiers (1), à la laine, aux non-tissés ou aux feutres des opacifiants optiques bloquant les infrarouges.

4. Procédé selon l'une des revendications 1 à 3, caractérisé par le fait que l'application de la pression, le traitement thermique, la pression de fabrication P_{F}, la température de fabrication T_{F} et le poids de la pile (3) sont choisis tels que lors de l'utilisation, la matière isolante (10) présente une compressibilité minimale avec une masse volumique minimale.

5. Procédé selon l'une des revendications 1 à 4, caractérisé par le fait que la pile (3) est exposée à une température de fabrication T_{F} qui est inférieure à la température de cristallisation de la matière utilisée pour la fabrication des fibres (1F).
